# EUROPEAN PATENT SPECIFICATION

(11) **EP 2 197 090 B1**
(45) Date of publication and mention of the grant of the patent: **19.07.2017**
(21) Application number: 09177269.9
(22) Date of filing: 26.11.2009
(51) Int. Cl.: H02K 7/12, H02K 21/02

(54) **Electric permanent magnet motor**
Elektrischer Permanentmagnetmotor
Moteur électrique à aimant permanent

(30) Priority: 15.12.2008 IT PN20080090
(43) Date of publication of application: 16.06.2010
(73) Proprietor: Nidec Sole Motor Corporation S.r.l., 33170 Pordenone (IT)
(72) Inventor: Bonacina, Sergio, 22043 GALBIATE (Lecco) (IT)
(74) Representative: Gonella, Mario

(56) References cited:
- DE-A1- 1 488 273
- GB-A- 733 975
- US-A- 1 039 197

## Description

The present invention refers to an electronically controlled, electric synchronous motor of the permanent-magnet type, in which the flux linkage with the stator windings is reduced as the rotation speed increases through a controlled extraction of the rotor from the respective stator in the axial direction.

In general, the technique based on causing the rotor to be partially extracted from the respective stator, both in electric drive motors and generators intended for a variety of applications, is largely known in the art.
a) In this connection, for instance, WO PCT/EP2008/060300 describes a motor that is provided with a spring-like member, implemented in the form of a double leaf spring, which is applied with a side thereof to a side of the rotor and, with the other side thereof, to the rotating motor shaft.
   Said shaft and the respective rotor are mutually engaged by means of provisions, such as in particular slots and respective ribs, or splines and keys, which are adapted to allow the shaft and the rotor to slide axially relative to each other, but do not allow any angular rotation of said shaft and rotor relative to each other.
   Described in this patent there is a simple, cost-effective embodiment, actually, which has however a drawback in that, especially in the case of an extended use, it allows for the axially slidable coupling between the shaft and the rotor to possibly undergo soiling, under resulting limitations in terms of actual length of the sliding motion of said members relative to each other and, therefore, a resulting loss in the efficiency of the same motor.
b) Known from the disclosure in the US patent application no. 2006/0097604 there are two different embodiments of an electric motor, in which the rotor is automatically extracted from, i.e. moved out of the stator as the rotating speed of the motor increases; however, the solutions set forth and illustrated in this publication turn practically out as being seriously affected by and conditional on the fact that such axial displacement must overcome a significant friction for it to be able to occur, and this causes the occurrence of the axial displacement of the rotor to become uncertain. Moreover, the construction of this motor is rather complex and demanding, implies the use of a large number of parts and, as a result, turns ultimately out as being excessively expensive.
c) Known from the patent publication EP 1 432 101 is the provision of an electric motor, in which the effect of partially pulling out the rotor from the stator in the axial direction is ensured by the use of a spiral or coil spring that is wound round an outer portion of the rotor shaft, in conjunction with an arrangement of levers, on which there are applied one or more weights that are arranged eccentrically relative to the axis of rotation. Under the action of the centrifugal force brought about by the rotating speed of the motor, these weights - via said levers - are then effective in decreasing the width occupied by said coil spring and, as a result, in bringing about the desired effect of pulling out the rotor from the stator in the axial direction.
   The solution considered in connection with the above-described embodiment appears to be fully effective and operatively functional, actually. However, even such solution seems to suffer a serious disadvantage due to a certain structural and manufacturing complexity thereof, since it requires as many as eight elementary hinges, further of course to the spring and the weights, which are separate devices as distinct from said spring.
d) Known from the patent publication EP 0 304 974 (cited in opposition to the above-noted publication) is the provision of an electric motor/generator, in which the rotor is automatically extracted from the stator in the axial direction when the rotating speed of the same rotor increases.

This involves a solution based on the provision of two distinct springs, i.e. a primary spring (13) and an auxiliary spring; in addition, both the inner region of the stator and the corresponding outer portion of the rotor must be given a frusto-conical shape: all this combines in making the construction of such motor quite complicated and expensive.

From DE 1 488 273 it is divulged a kind of electric generator whose rotor and stator may taken different and variable reciprocal positions in order to adjust the output voltage and to make it to stay basically constant even with a load variation.

However some operating limitations may be found in such an embodiment:
- said generator is not intended to work at different speeds, which is not acceptable in many applications in the field of motors acting as industrial actuators,
- and, first of all, it is required that, during the increase of the rotation speed, the sharp acceleration of the rotor motion outwards be properly slowed down and dampened, in order to avoid the actual risk that, in the long run, the motor be destroyied due to repeated and strong collisions between the rotor and some other parts of the motor itself.

In general, all afore-cited patent documents disclose the use of one or several, either biased or unbiased springs, and this gives in all cases rise to two kinds of major drawbacks, wherein
- the first such drawback lies in the basic fact that each spring - even the simplest one - has a cost, and this is in all cases an undesired circumstance in an industrial environment that is called to operate under conditions of extreme competitiveness;
- the second such drawback is of a technical nature and derives from the fact that each spring must be accurately calibrated also in view of and depending on the actual conditions of the rotor and the size or extent of the frictions it is due to overcome; now, these are data that can obviously be predicted, but this can in no case be done in as accurate a manner as required and desired, actually, and this inadequate accuracy in predicting such data gives in turn rise to an undesirably wide variability in and, as a result, a corresponding uncertainty as far as the performance characteristics of each single motor are concerned.

It is therefore desirable, and is a main object of the present invention, actually, to provide an electric permanent-magnet motor, in which the rotor is able to be automatically pulled out of the stator, in the axial direction relative thereto, as the the rotational speed of the same rotor increases, while anyway doing fully away with the typical drawbacks described above or, anyway, reducing them to quite significant an extent.

Furthermore, such motor shall also be capable of being manufactured with the use of readily available materials, tools and techniques, and - further to being easily and conveniently practicable - shall be such as to be able to ensure reliable performance results,

According to the present invention, this and further aims, which shall be illustrated in a more detailed manner in the following description, are reached in an electric permanent-magnet motor made and operating according to the
characteristics as set forth and recited in the appended claims.

Features and advantages of the present invention will anyway be more readily understood from the description that is given below by way of non-limiting example with reference to the accompanying drawings, in which:
- Figures 1 and 2 are cross-sectional views, along a plane passing through the axis of rotation, of a motor according to an example in two operating states thereof, in which the rotor is inserted, i.e. retracted in the stator, and in which the same rotor is partially pulled out of the stator, respectively;
- Figure 3 is a simplified perspective outer view of the operating parts of the motor shown in Figures 1 and 2, which are directly involved by the present invention;
- Figures 4 and 5 are geometric schematical views illustrating the mode of operation of the present invention, as referred to the motor in the operating states shown in Figures 1 and 2, respectively;
- Figure 6 is a perspective view of a sub-assembly of the motor shown in Figure 3, as represented in an isolated form;
- Figure 7 is a perspective view of a part of the sub-assembly of the motor shown in Figure 3, as represented again in an isolated form;

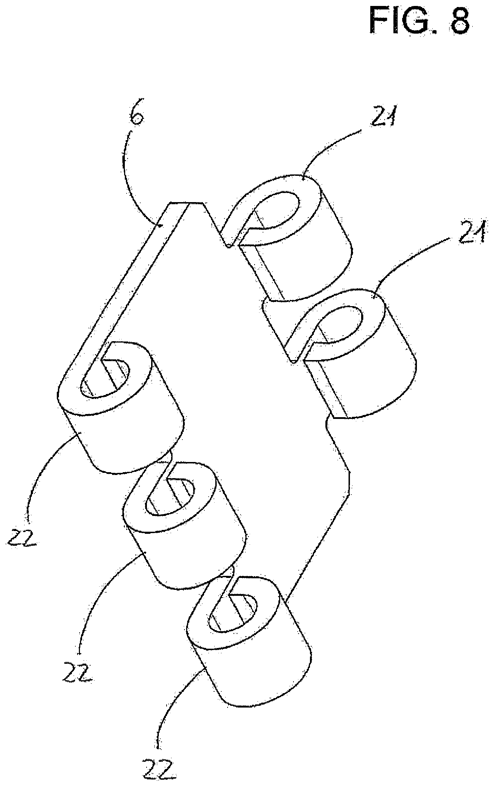

- Figure 8 is a perspective view of a further sub-part of the sub-assembly of the motor shown in Figure 3, as represented again in an isolated form;
- Figures 9 and 10 are views of an improved embodiment of the motor according to the present invention in two operating states thereof, in which the rotor is inserted, i.e. retracted in the stator, and in which the same rotor is partially pulled out of the stator, respectively;
- Figures 11 and 12 are views of a modified embodiment of the motor shown in Figures 9 and 10, as illustrated in the corresponding operating states thereof;
- Figures 13 and 14 are views of a yet further modified embodiment of the motor shown in Figures 9 and 10, as illustrated in the corresponding operating states thereof.

With reference to above Figures, an electric permanent-magnet motor according to an example comprises:
- a stator 1, having a plurality of ferromagnetic polarities or parts;
- a rotor 2, having an inner axial through-cavity, and provided with a plurality of permanent magnets 3 arranged on the outer surface thereof, in a manner as generally known as such in the art, so as to be facing outwardly, i.e. said stator;
- a rotating shaft 4, fitted into said inner through-cavity of the rotor, and adapted to keep in a position that is axially stable relative to said stator,
- wherein said rotor is adapted to translationally move into different positions relative to the axis X of said rotating shaft 4 and, therefore, relative to said stator.

On a side of the above-cited rotor 2 there is provided a first bridging member, which is comprised of two rigid plates 6, 7 as connected with each other by a first hinge 8 hinged on to a pin 24; the first one 6 of said rigid plates is connected with an end portion 68 thereof to a side portion of said first hinge 8 and, with the opposite end portion 69 thereof, to a second hinge 9, which is linked with an element thereof to a side of said rotor; the second one 7 of said rigid plates is connected with an end portion 78 thereof to the second side portion of said first hinge 8 and, with the opposite end portion 70 thereof, it is connected to a third hinge 10, which is linked in a firmly joined manner with the other element or side portion thereof to said rotating shaft in a firmly joined manner.

Preferably, due to reasons relating to both construction and operation, said two rigid plates 6 and 7 and, more generally, said first bridging member are provided in an arrangement that is symmetrical relative to a plane Y extending orthogonally to said axis X.

It should at this point be right away stressed that, as used herein, the term "firmly joined" has to be understood in a general manner, i.e. in a manner meaning that said side portion of said third hinge 10 keeps in a fixed, stable manner the mechanical position and relation thereof relative to said rotating shaft, even if - as this shall be explained further on - between said rotating shaft and said side portion of said third hinge 10 there may be interposed particular support members, which however do by no means prejudice or impair the fact that said third hinge 10 is capable of constantly rotating jointly with said rotating shaft; in other words, defined by such term is the fact that said third hinge is not necessarily in contact with or directly applied on to said rotating shaft. Another basic aspect of the present invention consists of the fact that said two rigid plates 6, 7 are made of a rather robust and heavy material, so that they are able to act as an eccentric weight relative to the axis X of the rotating shaft.

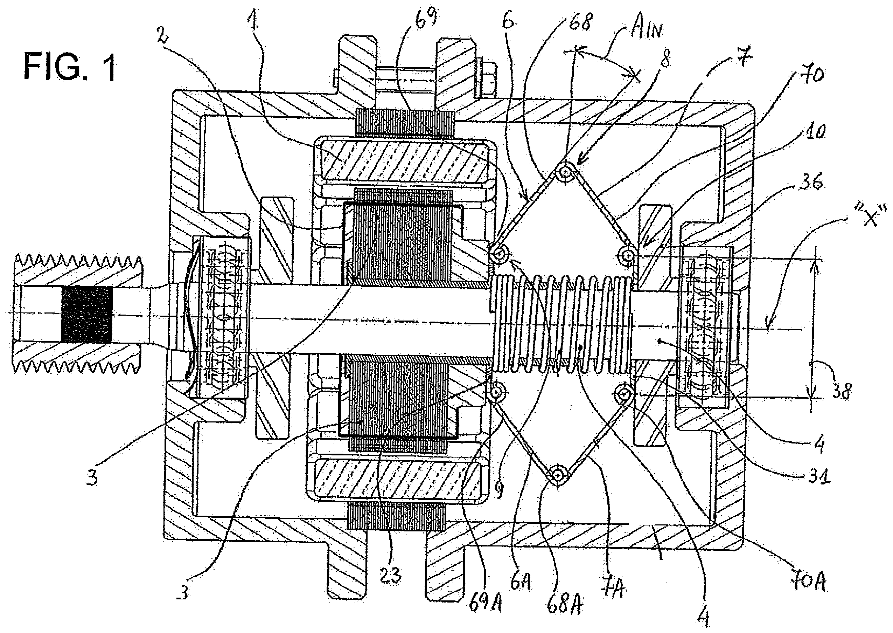

At this point, a first explanation of the manner in which the present invention operates can be given, actually. In fact, with reference to Figures 1, 2, 4 and 5, it can be noticed that, when the rotating speed of the rotor increases beyond a certain pre-determined limit, the eccentric weight of said plates 6, 7 undergoes a centrifugal acceleration that brings about an effect, according to which said plates tend to move closer to each other, so that the initial angle Aᵢₙ therebetween becomes narrower until it comes down to a final angle A_{fin} that is smaller than Aᵢₙ.

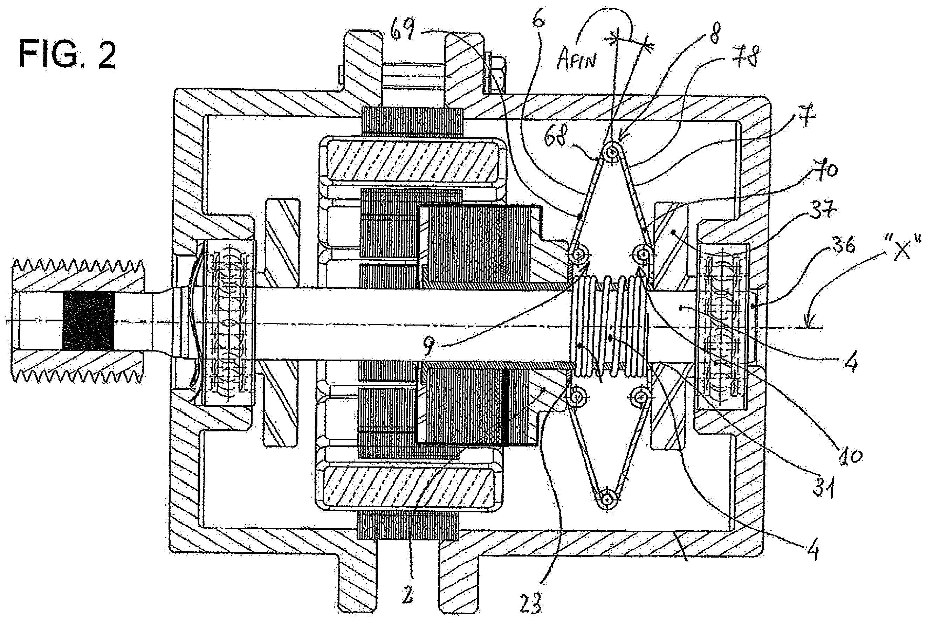

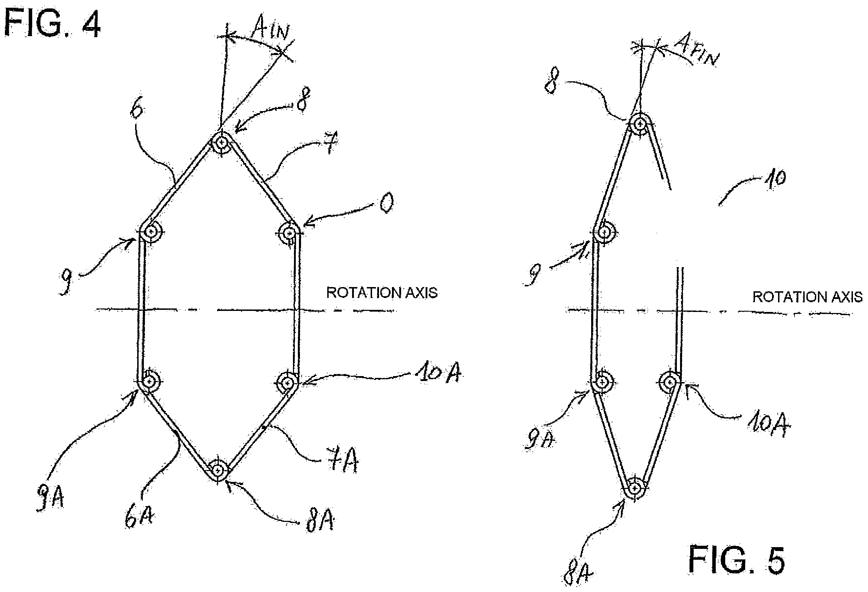

A comparison of the illustration in Figure 1 with the illustration in Figure 2, as well as the illustration in Figure 4 with the illustration in Figure 5, enables such particular effect to be almost immediately inferred.

Such narrowing of the above-cited angle in turn causes the second hinge 9 to automatically move closer to said third hinge 10 and, since the latter is firmly joined to said rotating shaft, the ultimate effect consists of said second hinge being pulled, i.e. attracted outwardly and, as a result, said rotor 4, which is connected to said second hinge 9, being in turn pulled, i.e. attracted outwardly, as this on the other hand is the purpose of the present invention, actually.

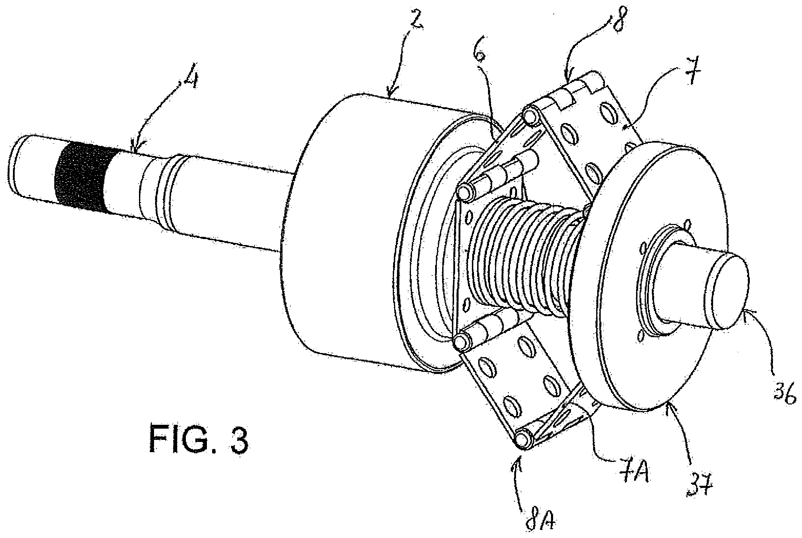

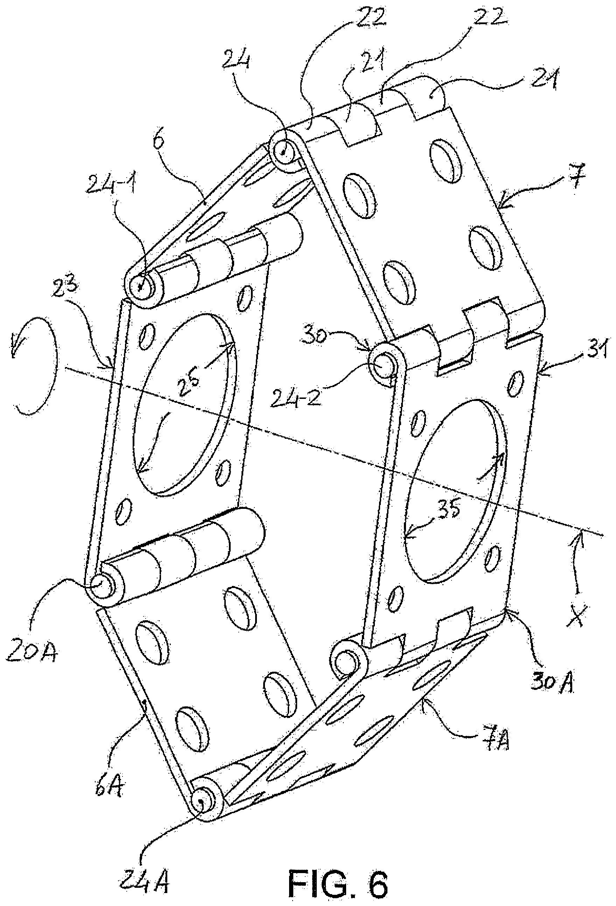

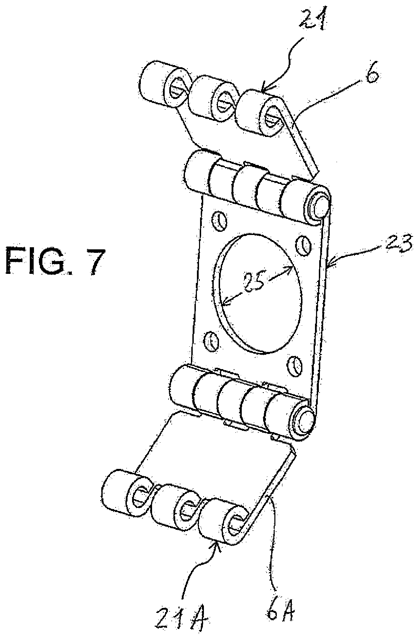

As described above, the present invention anyway allows for a number of further substantial improvements, as set forth below.
1) A first such improvement lies in the fact that said rotor 2 and said rotating shaft 4 can be provided in such manner as to prevent either of them from being able to drive and displace the other one neither axially nor rotationally.
   Now, this will of course be possible if the respective mating surfaces, i.e. the outer surface of the rotating shaft and the inner surface of the rotor, are substantially cylindrical.
   In this way, the driving torque delivered by the rotor would be solely transmitted to the second hinge 9 and, from the latter, to the first plate 6; then it would be transmitted to the first hinge 8 and, from the latter, to the second plate 7 and the third hinge 10, to eventually reach the rotating shaft 4.
   As a result, any direct coupling of the rotor with the rotating shaft would be eliminated and, with it, also any arrangement that would enable the driving torque delivered by the rotor to be directly transmitted to the rotating shaft, without passing also through said bridging structure comprised of the afore-cited members 6, 7, 8, 9, 10, 24.
   The basic advantage deriving from such first improvement lies in the possibility for any spline-and-key or groove-and-rib kind of coupling arrangement between rotor and shaft to be omitted, which of course means a significant saving effect in terms of manufacturing costs. More than that, this is fully feasible, i.e. can be obtained with excellent results, if said hinges 8, 9 and 10 are given an adequately robust and strong construction, so that it will be practically possible for the driving torque to be solely transmitted - in an absolutely reliable and risk-free manner - via said hinges, without the latter being twisted or breaking down.
2) In this connection, a second improvement relates exactly to such hinges.
   With particular reference to Figures 6 and 7, it can be noticed that such hinges are formed so as to include a plurality of rings 21, 22 at the two end portions of both plates due to be linked to each other, as well as the pins 24, 24-1 and 24-2 of respective ones of said three hinges 8, 9 and 10 engaging said rings, wherein such pins are arranged orthogonally to said axis X.
   It should at this point be specifically pointed out - even if those skilled in the art are generally supposed to be in a position as to readily understand it and, therefore, do certainly not need any specific explanation in this connection - that, as used in this description and in the appended claims, as well, the term "orthogonal" must be understood as meaning that a translational motion of said pins in a constantly parallel direction carries the same pins into a position and an orientation in which they lie geometrically and exactly orthogonal to said axis X and, as a result, strike on it.
   The above-described arrangement enable said hinges 8, 9 and 10 to be given an adequate robustness strength and rigidity for them to be able to allow the driving torque to be transmitted from the rotor to the rotating shaft via said hinges or, more than that, solely and exclusively via said hinges.
3) A third improvement is based on the fact that on another side of said rotor, and specifically in a position lying exactly opposite to said first bridging structure relative to said same rotating shaft, there is provided a second bridging structure made and positioned in a fully similar manner as said first bridging structure symmetrically thereto.
   As a result, said second bridging structure shall be understood as being comprised of elements and parts that are identical to the corresponding elements and parts of said first bridging structure, and - of course - are assembled in a same manner. Therefore, owing to reasons of greater simplicity and brevity, these elements and parts are identified in the Figures using the same reference numerals indicating the corresponding elements and parts of the first bridging structure, however under the addition of the suffix "A".
   The actual purpose of this improvement lies obviously in providing an overall structure that is more robust, stronger and, in particular, more stable and balanced, since such structure with a single bridging member would of course constitute an eccentric mass that - at high rotating speeds of the motor - would unavoidably give rise to significant dynamic unbalances.
4) A fourth improvement can in turn be provided in the manner described below.
   With reference to Figures 3, 6 and 7, said second hinge 9 of the first bridging member and the hinge 9A of the second bridging member provided symmetrically thereto are connected to the opposite edges 20, 20A of a first fastening plate 23 that is rigidly secured on the edge of said rotor.
   These opposite edges 20, 20A are of course given an arc-shaped configuration, so that they form a part of the second hinges 9 and 9A and are able to engage the respective pins 24, 24A (Figure 7).
   In addition, said first fastening plate 23 is provided inside with a related through-aperture 22, in which there can be inserted - in a freely rotatable manner - said shaft, which, as it may be once again stressed, shall be able to rotate in a synchronous manner with the structure formed of said two bridging members, but shall also be able to freely slide and displace on a side thereof, so as to be able to correspondingly vary the axial width of the same bridging members.
5) With reference to Figures 3 and 6, the same solution as the one contemplated in connection with the above-described improvement is also used on and applied to the other side of said two bridging members, i.e. the side opposite to the one facing said rotor and applied thereto.
   A second fastening plate 31 is therefore provided, the opposite edges 30, 30A of which engage - in a manner that is fully similar to the one considered in connection with the first fastening plate mentioned above - the respective plates 7, 7A, which, as already explained hereinbefore, are given a suitable arc-shaped configuration.
   Said second fastening plate 31 is in turn provided with a related through-aperture 35 for the shaft to be able to pass therethrough. The need arises here to properly point out that, although said shaft must not necessarily be caused to pass through said fastening plate from a strictly theoretical point of view, since it might on the contrary be rigidly linked to said same second fastening plate 31, actually, it however proves extremely useful - and almost necessary - for the same shaft to be allowed to extend out on the other side of said second fastening plate, so that it can then engage with its end portion 38 appropriate bearings (not shown) for the same shaft and - as a result - also the rotor to be normally supported thereby.
   Furthermore, said second fastening plate is applied in a firmly joined manner to an annular support member 37 that is attached to the rotating shaft in a manner as this is largely known as such in the art, e.g. by welding, caulking, press-fitting, or the like.
   The actual and readily understandable purpose of this improvement, jointly with the preceding one, lies in providing a symmetric and, therefore, robust and perfectly balanced overall bridging structure, that is readily and easily made and such as to allow for both the shaft to be able to axially slide therewithin and relative thereto, and the driving torque to be transmitted from the rotor to said annular support member 37 and, ultimately, to said rotating shaft 4 via said hinges 8, 9, 10, 8A, 9A, 10A and the related plates.
6) Another essential improvement to the purposes of the present invention lies in the fact that said permanent magnets 3 in the rotor and said ferromagnetic polarities in the stator are sized and arranged relative to each other, as well as geometrically configured relative to each other in such manner as to ensure that, when the rotor comes to a standstill, or rotates at a speed that is lower than a pre-determined one, the force of magnetic attraction between said permanent magnets and said stator is such as to allow said rotor to be attracted and displaced again into the stator.
   This function, which is in this way performed automatically based on and according to the rotating speed of the rotor, enables a result of paramount importance to be attained, actually, since it does away with the need for any form of physical spring to be provided, while allowing both the construction and the mode of operation of the motor to be simplified under readily apparent, significant improvements in terms of both production costs and operating simplicity and reliability.
7) In the actual use of the present invention in practice, following serious drawback has anyway been noticed to occur: when displacing laterally, i.e. being extracted from the stator, the rotor usually tends in fact to move away in a very quick manner at an increasing speed.

Now, such circumstance can be readily understood if the fact is considered that the force of magnetic attraction of the permanent magnets is rapidly decreasing as the rotor keeps moving away from the stator, and, as a result, the force attracting the same motor towards the stator is progressively decreasing.

Conversely, the force urging the rotor to displace out of and away from the stator depends on the centrifugal force that acts on said rigid plates 6, 7, 6A, 7A and urges them to move closer to each other, while urging the same rotor into such motion.

Since the centrifugal force depends on the square value of the rotating speed, it ensues that, even under a modest increase in the rotating speed, such centrifugal force increases in a much quicker manner, and this of course causes the force extracting the rotor from the stator to increase in a similarly quick manner

The combined effect of said two decreasing and increasing patterns of said mutually opposed forces, i.e. the rapidly decreasing force attracting the rotor into the stator and the rapidly increasing force that tends to pull the rotor out of the stator in the opposite direction, is such that the same rotor is urged in the extraction direction with a combined force resulting from said two mutually opposed forces changing in a different manner in diverging directions, which increases in a very quick manner.

The ultimate result of this situation is that the rotor itself is urged at a speed that increases in a very quick manner towards the farthermost position thereof, i.e. towards the annular support member 37, without any braking action being exerted on it, so that it eventually bumps in a rather violent manner thereagainst.

It can be most readily appreciated that such occurrence would unavoidably cause the same motor to become damaged, i.e. suffer some deterioration, while of course determining a poor controllability of the movement of the rotor as the latter is caused to displace outwardly.

In view of doing away with this drawback, a further improvement is therefore aimed at providing elastic shock-damping means, which are adapted to act in the final part of the travelling path of the rotor as it moves outwardly, so as this shall be described and explained below.

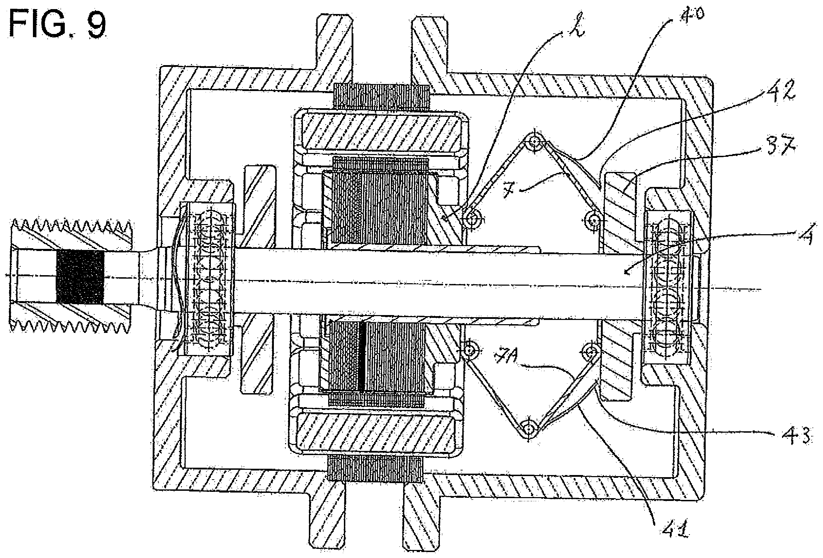

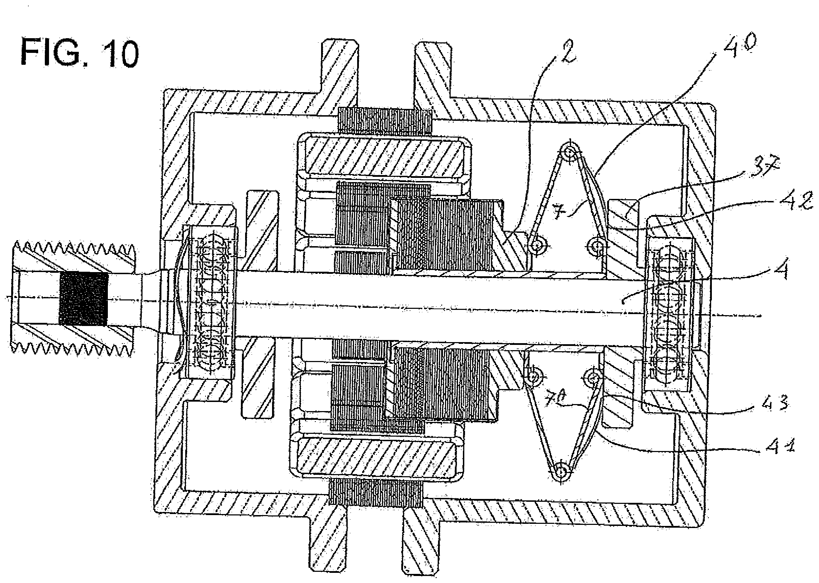

These shock-damping means can be embodied in a number of different manners; anyway, with reference to Figures 9 and 10, these means are shown to be embodied in the form of elastic tabs 40, 41, which are applied on to the outer portion of the respective plates 7 and 7A, wherein both of them are oriented towards said annular support member 37.

It can be most readily appreciated that such tabs must also be sized and applied so as to make sure that, when the rotor rotates at a low speed, the end portions 42 and 43 thereof remain at a distance from said annular support member 37 or in a position, in which they just skim the latter (cf. Figure 9).

Furthermore, such elastic tabs are so sized and applied as to make sure that, when the rotating speed of the rotor increases and said rigid plates move closer to each other, as this has been explained afore, said end portions 42 and 43 of the respective elastic tabs 40, 41 come to oppose the final displacement of the rotor towards and against said annular support member 37, wherein they however do this not by opposing such resistance as to definitely block such displacement, but just a resistance that will brake the rotor moving in the described manner, thereby attaining the desired ultimate result of preventing the same rotor from violently bumping against the annular support member, as set forth above (cf. Figure 10).

It can also be most readily appreciated that such tabs must be sized and applied so that, when the rotor rotates at a low speed, the end portions 42 and 43 thereof will reduce the pressure exerted upon or move simply away from said annular support member 37.

It should be right away pointed out that such shock-damping means as described above, as well as all other similar means that shall be explained further on in this description, are not provided in view of creating an elastic force tending to urge the rotor again into the stator when the rotating speed thereof decreases, as this is on the contrary described in the afore-cited document EP 1 432 101; as a matter of fact, no indication is given in said document that would allude to the fact that the rotor is provided with permanent magnets.

Quite the reverse, it most clearly sets forth that the spring provided coaxially to the rotating shaft has the sole duty to perform in view of urging the rotor into moving back into the stator when the same rotor slows down.

And exactly for this reason the cited document can be seen to most clearly explain, and claim, actually, that said coaxial spring is pre-loaded, i.e. biased; such constraint is in fact necessary in view of ensuring a full return travel of the rotor into the stator.

On the contrary, according to this improved embodiment of the present invention the return travel of the rotor into the stator is anyway ensured by the action of the permanent magnets and, as a matter of fact, no requirement is placed on said shock-damping means to such particular purpose, actually.

And exactly for this reason said shock-damping means, i.e. said elastic tabs in the exemplarily described embodiment, are normally free, i.e. not pre-loaded or biased, in a state that is on the contrary impossible to contemplate in the case of the coaxial spring in the above-cited document, in which, in the case that said spring is not pre-loaded, i.e. biased, the rotor would not be able to be urged fully back into the stator.

The above considerations are therefore believed to be quite adequate in explaining and setting forth the reasons why said shock-damping means of the present invention can by no way be compared with the coaxial spring of the cited document EP 1 432 101, since they
- differ in their shape and form,
- differ in the duty they are required to perform, in that
- they ensure a final damping action on the axial displacement motion of the rotor at the higher rotating speeds thereof,
- whereas the coaxial spring in the above-cited prior-art patent ensures the return displacement of the rotor into the stator at the lower rotating speeds thereof.

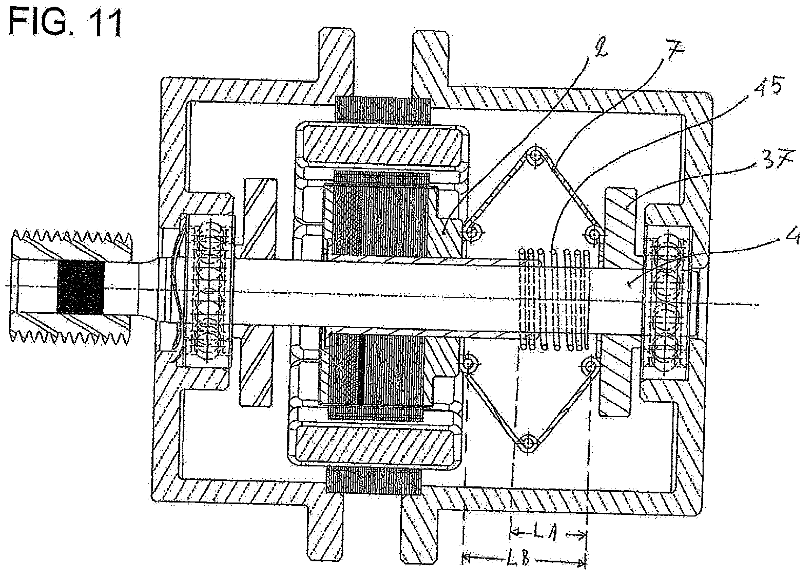

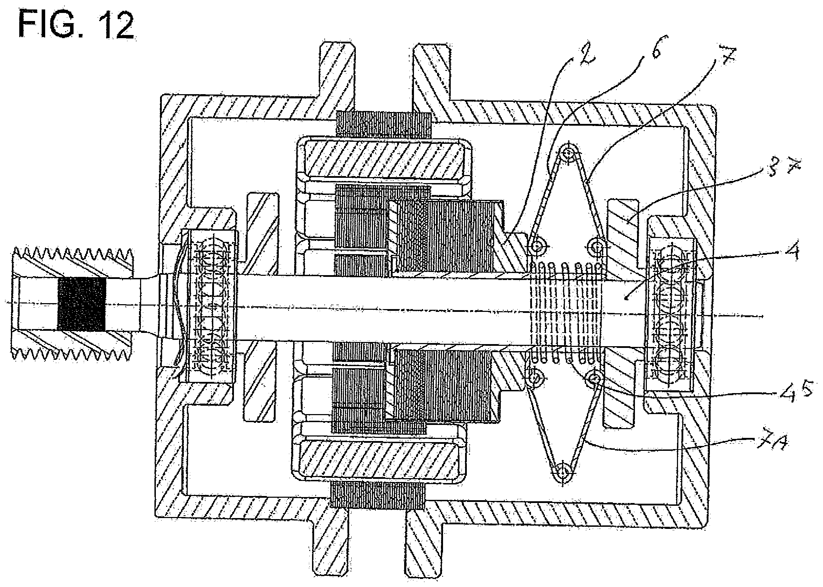

With reference to Figures 11 and 12, such shock-damping means can further be embodied in the form of a suitable coil spring 45 provided coaxially to and wound round the rotating shaft, as well as arranged between said rigid plates.

This coaxial spring 45, however, does not extend all over the length allowed by said plates 6, 7 (and, of course, also by said plates 6A, 7A).

In fact, in consideration of the fact that the duty that such spring 45 is called to perform lies in damping the movement of the rotor as it displaces towards and against said annular support member 37, when in its resting state said spring shall have a length LA, as shown in Figure 11, which is shorter than the distance LB between said boundary hinges 9 and 10, or between the hinges 9A and 10A, as the case may be, when the rotor rotates at a sufficiently low speed, i.e. when said plates are "open", i.e. moved away from each other.

When the rotating speed on the contrary increases (Figure 12), said spring 45 comes to be compressed between the hinges 9 and 10, or the hinges 9A and 10A, thereby bringing about the desired damping effect opposing the violent displacement of the rotor towards and against the annular support member 37.

It should again be quickly noticed that the above-noted circumstance once more stresses the difference existing between this embodiment of the present invention and the afore-cited patent publication EP 1 432 101, in which the coaxial spring shall not only necessarily extend all over the length that is available between the bridging members being subject to the centrifugal force, but must also be pre-loaded, i.e. biased.

It should further be noticed that the above-mentioned spring 45 may also be freely inserted on the shaft 4, i.e. in a condition in which the respective end portions are not restrained, in consideration of the fact that, each time that it has to come into working, the position of the same spring is automatically ensured by the pushing effect of the rotor and said first fastening plate 23 towards and against said annular support member 37.

It will at this point be readily and clearly appreciated that all considerations that have been set forth afore have to be understood as fully applying also to this particular embodiment of the shock-damping means according to the present invention, so that they shall not be dealt with all over again.

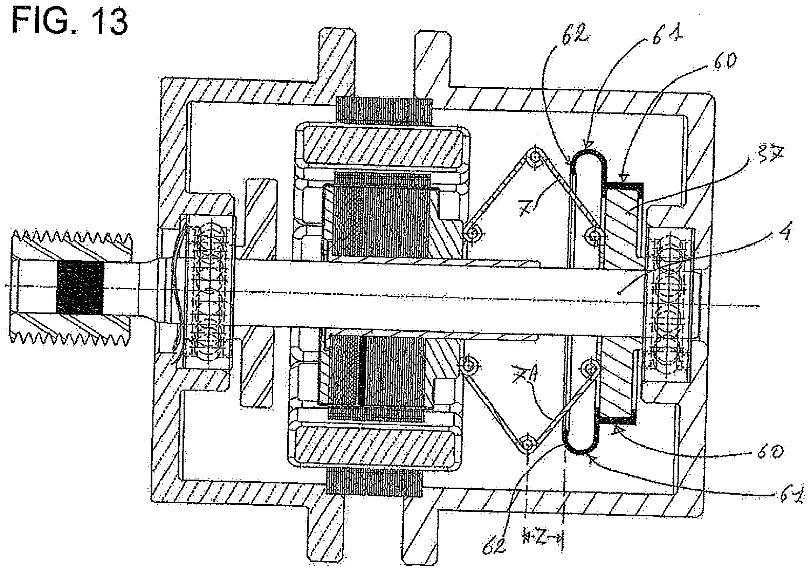

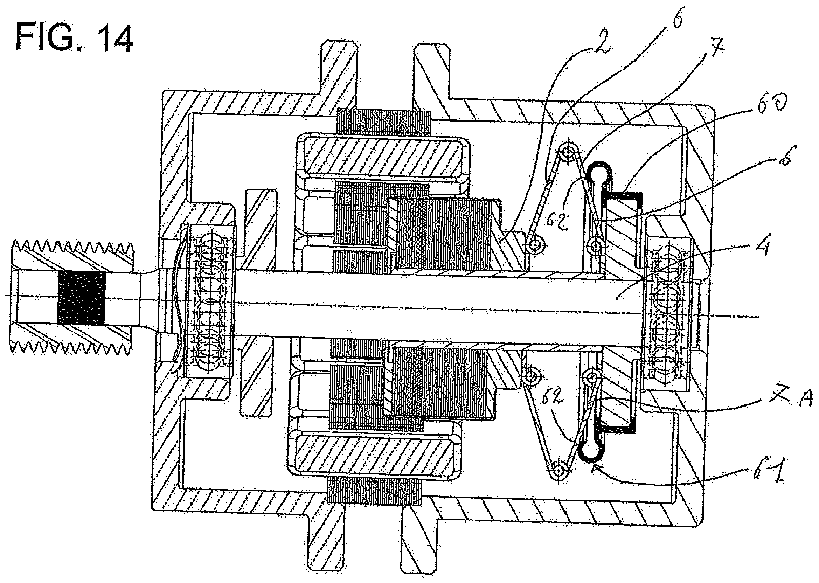

With reference to Figures 13 and 14, an embodiment of a shock-damping means according to the present invention is now dealt with, which is different from, but performs the same function as the above-described means of the same kind.

As shown in said Figures 13 and 14, said shock-damping means is provided in the form of an annular elastic member, which is applied to or fitted on said annular support member 37 with an end portion 60 thereof, while, on the other end portion 61 thereof, it is provided with a ring-shaped, flexible and elastic rim 62 extending towards said rigid plates 7, 7A.

In an advantageous manner, said ring-shaped rim 62 is provided in a bellows-like form, i.e. it is folded and curved so as to allow for a greater damping effect when said plates 7 and 7A are shifted towards said annular support member 37 owing to the centrifugal force that acts thereupon at the higher rotating speeds of the rotor, as this is best shown in Figure 14.

Even in this case, during low-speed rotation of the rotor, as illustrated in Figure 13, said ring-shaped rim 62 is of course moved away from said rigid plates 7 and 7A, as separated by a distance Z therefrom, so as to avoid affecting the initial movement of the rotor as it displaces from the stator when the rotating speed of the rotor is being accelerated.

Only upon said rotating speed of the rotor having increased beyond an easily pre-determinable level, said rigid plates 7 and 7A will be able to move into contact with and press against said ring-shaped rim 62, thereby compressing it and receiving in turn - as an automatic reaction - the desired damping force that slows down the final axial displacement speed of said rigid plates and, as a result, the rotor and all members associated therewith, to an appropriate extent.

It can be readily appreciated that such elastic reaction will then crease as soon as the rotating speed of the rotor decreases below the pre-determined value cited above, since said rigid plates - at such slower rotating speed - are caused to move again away from said ring-shaped rim 62 owing to the sole effect of the magnetic attraction of the permanent magnets on the rotor, as already set forth hereinbefore, which eventually causes the rotor to again displace axially towards and into the stator.

It will of course be appreciated that said shock-absorbing means according to the present invention may be embodied in a number of further different manners, as long as they are anyway provided so as to be able to become solely active in the final phase of the axial outward displacement of the rotor, and by no way in advance thereto, and as long as they are not provided so as to perform any function or take anyway part in the backward or return displacement of the rotor towards and into the stator as the rotating speed thereof decreases.

## Claims

1. Synchronous permanent magnet electric motor, in which the flux linkage with the stator windings is reduced as the rotation speed increases through a controlled extraction of the rotor from the respective stator in the axial direction, comprising:
a stator (1) provided with a plurality of ferro-magnetic poles,
a rotor (2) provided with an inner through-cavity and able of taking a translation motion along its axis (X) in different positions with regard to said stator, and provided with a plurality of permanent magnets (3) oriented towards the outer rotor side,
a rotating transmission shaft (4) inserted inside said rotor, and axially stable with respect to said stator,
actuator means able of detecting the rotation speed of said rotor and of axially attracting said rotor according to its rotation speed, by exploiting the centrifugal force, **characterized**
- **in that** the reciprocally faced surfaces between said inner cavity inside said rotor (2) and said rotating shaft (4) are cylindrical surfaces, deprived of any directly engaging means,
- **in that** said actuator means do comprise:
a first bridge member, preferably symmetrical with respect to a plane orthogonal to said axis (X), and provided with:
two rigid plates (6, 7) hinged to each other at a respective their ends (68, 78) by a first hinge (8), wherein the opposed end of a first (6) of said rigid plates (6, 7) is firmly engaged by a second hinge (9) on a side of said rotor (2), and wherein the opposed end portion (70) of the second one (7) of said rigid plates is hinged by a third hinge (10) which is solid to said rotating shaft (4),
wherein said three hinges (8, 9, 10) are provided with respective pins (24, 24-1, 24-2) which are basically parallel and orthogonal to said axis (X), and a second bridge member (6A, 7A, 8A, 9A, 10A), substantially identical to said first bridge member, and placed on the opposite side of said first bridge member with respect to said rotating shaft (4),
wherein on the side of said rotor-oriented towards said two bridge members a first mounting plate (23) is arranged, said two second hinges (9, 9A) being directly connected to said first mounting plate (23),
when the rotation speed of said rotor overcomes a pre-defined level, the respective said plates (6, 7 - 6A, 7A) of each said bridge member get closer to each other, passing from a larger angle (Ain) to a smaller angle (Afin),
- and **in that** the motor further comprises elastic damping means (40, 41, 45, 60, 61) able of attenuating and slowing down the axial outward motion of said rotor and of said plates only during the end step of said axial motion.

2. Motor according to claim 1, **characterized in that** on the side of said two bridge members, opposed to said rotor (2), a second mounting plate (31) is arranged, and **in that** said two hinges (10, 10A), which are solid to said rotating shaft (4) are directly mounted on said second mounting plate (31).

3. Motor according to claim 2, **characterized in that** at least one of said mounting plates is provided with respective inner apertures (25, 35), and **in that** said two plates are arranged respectively on a side of said rotor and on a annular support member (37) which is directly and firmly connected to said rotating shaft so as said shaft passes through said apertures (25, 35).

4. Motor according to any of the previous claims, **characterized in that** when it rotates at a speed which is lower than a pre-defined level, or it is stopped, said permanent magnets (3) are able of attracting said rotor (2) into said stator (1).

5. Motor according to claim 3, **characterized in that** said damping means comprise a plurality of elastic tabs (40, 41) connected on the outer side of respective said rigid plates (7, 7A), and whose end portions (42, 43) stay substantially separate from said annular support member (37) until the rotation speed remains below a pre-determined level, and which are elastically pressed against it when said speed increases.

6. Motor according to claim 1, **characterized in that** said damping means comprise a spiral spring (45) which is coaxially wound around said rotation shaft (4) in its portion corresponding to said rigid plates, **in that** the length (LA) of said coaxial spring is smaller of the distance between the end hinges (9, 10) when the rotor rotates at a speed lower than a pre-determined level, and **in that** said coaxial spring is elastically compressed when the rotation speed exceeds a pre-determined level.

7. Motor according to claim 3, **characterized in that** said damping means comprise an elastic ring means mounted on its end (60) around said annular support member (37), whose opposed end portion (61) is provided with an elastic, and preferably ring-shaped rim (62) which extends toward said two rigid plates (7, 7A) placed in opposed sides with respect to said shaft (4), and **in that** said preferably ring-shaped rim (62) remains separate from said rigid plates when the motor rotates at a speed lower than a pre-determined level, and is elastically compressed against said plates (7, 7A) when the rotation speed exceeds said pre-determined level.

## Patentansprüche

1. Permanentmagnet-Synchronmotor, bei dem die Flussverkettung mit den Ständerwicklungen bei steigender Drehzahl über ein kontrolliertes Herausziehen des Läufers aus dem entsprechenden Ständer in der axialen Richtung reduziert wird, wobei er umfasst:
einen Ständer (1), der mit einer Vielzahl ferromagnetischer Pole versehen ist,
einen Läufer (2), der mit einem inneren durchgehenden Hohlraum versehen ist und eine Verschiebungsbewegung entlang seiner Achse (X) an verschiedene Positionen in Bezug auf den Ständer ausführen kann und mit einer Vielzahl von Permanentmagneten (3) versehen ist, die zu der Außenseite des Läufers hin ausgerichtet sind,
eine Dreh-Übertragungswelle (4), die in das Innere des Läufers eingeführt ist und in Bezug auf den Ständer axial stabil ist,
eine Stellglied-Einrichtung, die in der Lage ist, die Drehzahl des Läufers zu erfassen und den Läufer unter Ausnutzung der Zentrifugalkraft entsprechend seiner Drehzahl axial anzuziehen, **dadurch gekennzeichnet,**
**dass** die einander zugewandten Flächen des inneren Hohlraums im Inneren des Läufers (2) und der Dreh-Welle (4) zylindrische Flächen sind, die keinerlei direkt eingreifende Einrichtungen aufweisen,
und **dass** die Stellglied-Einrichtung umfasst:
ein erstes Brückenelement, das vorzugsweise symmetrisch in Bezug auf eine Ebene im rechten Winkel zu der Achse (X) ist und versehen ist mit:
zwei starren Platten (6, 7), die an ihren jeweiligen Enden (68, 78) über ein erstes Gelenk (8) gelenkig miteinander verbunden sind, wobei das gegenüberliegende Ende einer ersten (6) der starren Platten (6, 7) fest mit einem zweiten Gelenk (9) an einer Seite des Läufers (2) in Eingriff ist und der gegenüberliegende Endabschnitt (70) der zweiten (7) der starren Platten über ein drittes Gelenk (10) gelenkig verbunden ist, das aus einem Stück mit der Dreh-Welle (4) besteht,
wobei die drei Gelenke (8, 9, 10) mit jeweiligen Bolzen (24, 24-1, 24-2) versehen sind, die im Wesentlichen parallel und rechtwinklig zu der Achse (X) sind,
sowie ein zweites Brückenelement (6A, 7A, 8A, 9A, 10A), das im Wesentlichen identisch mit dem ersten Brückenelement ist und an der dem ersten Brückenelement in Bezug auf die Dreh-Welle (4) gegenüberliegenden Seite angeordnet ist,
wobei an der Seite des Läufers, die zu den zwei Brückenelementen hin ausgerichtet ist, eine erste Anbringungsplatte (23) angeordnet ist und die zwei Gelenke (9, 9A) direkt mit der ersten Anbringungsplatte (23) verbunden sind,
und, wenn die Drehzahl des Läufers einen vordefinierten Wert überschreitet, sich die jeweiligen Platten (6, 7 - 6A, 7A) jedes der Brückenelemente einander nähern und von einem größeren Winkel (Ain) zu einem kleineren Winkel (Afin) übergehen,
und der Motor des Weiteren eine elastische Dämpfeinrichtung (40, 41, 45, 60, 61) umfasst, die in der Lage ist, die nach außen gerichtete axiale Bewegung des Läufers und der Platten nur während des abschließenden Schrittes der axialen Bewegung zu dämpfen und zu verlangsamen.

2. Motor nach Anspruch 1, **dadurch gekennzeichnet, dass** an der Seite der zwei Brückenelemente, die dem Läufer (2) gegenüberliegt, eine zweite Anbringungsplatte (31) angeordnet ist, und dass die zwei Gelenke (10, 10A), die aus einem Stück mit der Dreh-Welle (4) bestehen, direkt an der zweiten Anbringungsplatte (31) angebracht sind.

3. Motor nach Anspruch 2, **dadurch gekennzeichnet, dass** wenigstens eine der Anbringungsplatten mit jeweiligen inneren Öffnungen (25, 35) versehen ist und dass die zwei Platten jeweils an einer Seite des Läufers und an einem ringförmigen Trageelement (37) angeordnet sind, das direkt und fest mit der Dreh-Welle verbunden ist, so dass die Welle durch die Öffnungen (25, 35) hindurchtritt.

4. Motor nach einem der vorangehenden Ansprüche, **dadurch gekennzeichnet, dass**, wenn er sich mit einer Drehzahl dreht, die unter einem vordefinierten Wert liegt, oder er angehalten wird, die Permanentmagneten (3) in der Lage sind, den Läufer (2) in den Ständer (1) hinein anzuziehen.

5. Motor nach Anspruch 3, **dadurch gekennzeichnet, dass** die Dämpfeinrichtung eine Vielzahl elastischer Zungen (40, 41) umfasst, die an der Außenseite der jeweiligen starren Platten (7, 7A) angebracht sind und deren Endabschnitte (42, 43) im Wesentlichen getrennt von dem ringförmigen Trageelement (37) bleiben, bis die Drehzahl unter einem vorgegebenen Wert bleibt, und die elastisch dagegen gedrückt werden, wenn sich die Drehzahl erhöht.

6. Motor nach Anspruch 1, **dadurch gekennzeichnet, dass** die Dämpfeinrichtung eine Spiralfeder (45) umfasst, die um die Dreh-Welle (4) in Ihrem Abschnitt, der den starren Platten entspricht, koaxial herum gewickelt ist, dass die Länge (LA) der koaxialen Feder kleiner ist als der Abstand zwischen den End-Gelenken (9, 10), wenn sich der Läufer mit einer Drehzahl dreht, die niedriger ist als ein vorgegebener Wert, und dass die koaxiale Feder elastisch zusammengedrückt wird, wenn die Drehzahl einen vorgegebenen Wert überschreitet.

7. Motor nach Anspruch 3, **dadurch gekennzeichnet, dass** die Dämpfeinrichtung eine elastische Ringeinrichtung umfasst, die an ihrem Ende (60) um das ringförmige Trageelement (37) herum angebracht ist, deren gegenüberliegender Endabschnitt (61) mit einem elastischen und vorzugsweise ringförmigen Rand (62) versehen ist, der sich auf die zwei starren Platten (7, 7A) zu erstreckt, die an einander gegenüberliegenden Seiten in Bezug auf die Welle (4) angeordnet sind, und dass der vorzugsweise ringförmige Rand (62) getrennt von den starren Platten bleibt, wenn sich der Motor mit einer Drehzahl dreht, die niedriger ist als ein vorgegebener Wert, und elastisch an die Platten (7, 7A) gedrückt wird, wenn die Drehzahl den vorgegebenen Wert überschreitet.

## Revendications

1. Moteur électrique synchrone à aimant permanent, dans lequel le flux conductif avec le bobinage du stator est réduit par une extraction contrôlée du rotor du stator correspondant dans la direction axiale lorsque la vitesse de rotation augmente, comprenant:
un stator (1) muni d'une pluralité de pôles ferromagnétiques,
un rotor (2) muni d'une cavité traversante intérieure et apte à effectuer un mouvement de translation le long de son axe (X) dans différentes positions par rapport audit stator et muni d'une pluralité d'aimants permanents (3) orientés vers le côté extérieur du rotor,
un arbre de transmission rotatif (4) inséré à l'intérieur dudit rotor et axialement stable par rapport audit stator,
des moyens d'actionnement capables de détecter la vitesse de rotation dudit rotor et d'attirer axialement ledit rotor en fonction de sa vitesse de rotation, en exploitant la force centrifuge, **caractérisé**
- **en ce que** les surfaces se faisant face entre ladite cavité interne à l'intérieur dudit rotor (2) et ledit arbre rotatif (4) sont des surfaces cylindriques, dépourvues de tout moyen d'engagement direct,
- **en ce que** lesdits moyens d'actionnement comprennent: un premier élément de pont, de préférence symétrique par rapport à un plan orthogonal audit axe (X), et pourvu de: deux plaques rigides (6, 7) articulées l'une à l'autre à leurs extrémités respectives (68, 78) par une première charnière (8), dans lequel l'extrémité opposée d'une (6) desdites plaques rigides (6, 7) est fermement engagée par une seconde charnière (9) sur un côté dudit rotor (2), et dans lequel la partie d'extrémité opposée (70) de la seconde (7) desdites plaques rigides est articulée par une troisième charnière (10) qui est solidaire dudit arbre rotatif (4),
dans lequel lesdites trois charnières (8, 9, 10) sont munies de broches respectives (24, 24-1, 24-2) essentiellement parallèles et orthogonales audit axe (X), et un second élément de pont (6A, 7A, 8A, 9A, 10A), sensiblement identique audit premier élément de pont, et placé sur le côté opposé dudit premier élément de pont par rapport audit arbre rotatif (4),
dans lequel sur le côté desdits deux éléments de pont orientés vers ledit rotor, une première plaque de montage (23) est agencée, lesdites deux secondes charnières (9, 9A) étant directement connectées à ladite première plaque de montage (23),
lorsque la vitesse de rotation dudit rotor dépasse un niveau prédéfini, lesdites plaques respectives (6, 7 - 6A, 7A) de chaque dit élément de pont se rapprochent l'une de l'autre, passant d'un angle plus grand (Ain) à un angle plus petit (Afin),
- et **en ce que** le moteur comprend en outre des moyens d'amortissement élastiques (40, 41, 45, 60, 61) capables d'atténuer et de ralentir le mouvement axial vers l'extérieur dudit rotor et desdites plaques uniquement pendant l'étape finale dudit mouvement axial.

2. Moteur selon la revendication 1, **caractérisé en ce que**, sur le côté desdits deux éléments de pont, opposés audit rotor (2), une deuxième plaque de montage (31) est agencée, et **en ce que** lesdites deux charnières (10, 10A) solidaires dudit arbre rotatif (4) sont montées directement sur ladite deuxième plaque de montage (31).

3. Moteur selon la revendication 2, **caractérisé en ce qu'**au moins une desdites plaque de montage est munie d'ouvertures intérieures respectives (25, 35), et **en ce que** lesdites deux plaques sont disposées respectivement sur un côté dudit rotor et sur un élément annulaire de support (37) qui est relié directement et fermement audit arbre rotatif de sorte que ledit arbre traverse lesdites ouvertures (25, 35).

4. Moteur selon l'une quelconque des revendications précédentes, **caractérisé en ce que**, lorsqu'il tourne à une vitesse inférieure à un niveau prédéfini, ou est arrêté, lesdits aimants permanents (3) sont capables d'attirer ledit rotor (2) dans ledit stator (1).

5. Moteur selon la revendication 3, **caractérisé en ce que** lesdits moyens d'amortissement comprennent une pluralité de pattes élastiques (40, 41) reliées sur le côté extérieur de dites plaques rigides (7, 7A) respectives et dont les parties d'extrémité (42, 43) restent sensiblement séparées dudit élément annulaire de support (37) jusqu'à ce que la vitesse de rotation reste inférieure à un niveau prédéterminé et qui sont appliqués élastiquement contre celles-ci lorsque ladite vitesse augmente.

6. Moteur selon la revendication 1, **caractérisé en ce que** lesdits moyens d'amortissements comprennent un ressort (45) en spirale qui est enroulé coaxialement autour dudit arbre de rotation (4) dans sa partie correspondant auxdites plaques rigides, **en ce que** la longueur (LA) dudit ressort coaxial est plus petite de la distance entre les charnières d'extrémité (9, 10) lorsque le rotor tourne à une vitesse inférieure à un niveau prédéterminé, et **en ce que** ledit ressort coaxial est comprimé élastiquement lorsque la vitesse de rotation dépasse un niveau prédéterminé.

7. Moteur selon la revendication 3, **caractérisé en ce que** lesdits moyens d'amortissement comprennent un moyen formant un anneau élastique monté sur son extrémité (60) autour dudit élément annulaire de support (37), dont la partie d'extrémité opposée (61) est munie d'un élastique, et de préférence un rebord en forme d'anneau (62) qui s'étend vers lesdites deux plaques rigides (7, 7A) placées dans des côtés opposés par rapport audit arbre (4), et **en ce que** ledit rebord en forme d'anneau (62) reste séparé desdites plaques rigides lorsque le moteur tourne à une vitesse inférieure à un niveau prédéterminé et est comprimé élastiquement contre lesdites plaques (7, 7A) lorsque la vitesse de rotation dépasse ledit niveau prédéterminé.
